# EUROPEAN PATENT SPECIFICATION

(11) **EP 1 209 613 B1**
(45) Date of publication and mention of the grant of the patent: **20.08.2003**
(21) Application number: 02002293.5
(22) Date of filing: 04.11.1992
(51) Int. Cl.: G06K 7/10

(54) **Compact bar code scanning arrangement**
Kompakte Strichkode- Abtastanordnung
Dispositif compact de balayage de code à barres

(30) Priority: 04.11.1991 US 787458; 19.05.1992 US 884734
(43) Date of publication of application: 29.05.2002
(62) Divisional of application: 97202999.5
(73) Proprietor: SYMBOL TECHNOLOGIES, INC., Holtsville, New York 11742-1300 (US)
(72) Inventor: Bard, Simon, Stony Brook, New York 11790 (US); Metlitsky, Boris, Stony Brook, New York 11790 (US); Krichever, Mark, Hauppauge, New York 11788 (US); Swartz, Jerome Symbol Technologies INC., Holtsville, NY 11742-1300 (US); Stratienco, Askold c/o Symbol Technologies INC., Holtsville, NY 11742-1300 (US); Katz, Joseph, Stony Brook, New York 11790 (US)
(74) Representative: Wagner, Karl H., Dipl.-Ing.

(56) References cited:
- EP-A- 0 425 844
- GB-A- 2 175 705
- US-A- 4 421 381

## Description

### BACKGROUND OF THE INVENTION

### 1. Field of the Invention

The present invention relates generally to a compact bar code scanning element which is simple, and does not utilize a relatively bulky motor-driven construction.

In general, it would be desirable to provide a compact bar code scanner which eliminates the need for bulky motor-driven constructions and is capable of achieving a high speed 250-300 Hz scan motion.

The present invention provides in an embodiment a compact bar code scanner which is capable of scanning along a single axis.

### 2. Discussion of the Prior Art

Various optical readers and optical scanning systems have been developed heretofore for reading bar code symbols appearing on a label or on the surface of an article. The bar code symbol itself is a coded pattern of indicia comprised of a series of bars of various widths spaced apart from one another to bound spaces of various widths, with the bars and spaces having different light-reflecting characteristics.

The scanning of bar code patterns has become more complex as bar code patterns have become both more complex and more compact. A typical bar code pattern includes lines and spaces of different widths extending in an x direction, and can be scanned by one or more linear scans in the x direction. Moreover, because the direction of the scan is not always precisely aligned with the direction of the bar code pattern, more complex omnidirectional scanning patterns are sometimes used, wherein consecutive scan lines are angularly displaced relative to one another to form a complex omnidirectional scanning pattern. Two dimensional (2D) bar code patterns (Code 49) have also been introduced wherein, in addition to a typical bar code pattern having lines and spaces of varying widths along an x direction, typical bar code patterns are stacked one upon the other in the y direction to form the 2D bar code pattern.
Accordingly, scanning of a 2D bar code pattern is more complex, and requires a raster type of scan wherein consecutive x direction scans are displaced in the y direction by the spacing between stacked rows of the 2D bar code pattern to form a raster scan.

Bar code reading type data input systems improve the efficiency and accuracy of data input for a wide variety of applications. The ease of data input in such systems facilitates more frequent and detailed data input, for example to provide efficient inventories, tracking of work in progress, etc. To achieve these advantages, however, users or employees must be willing to consistently use the bar code readers. The readers therefore must be easy and convenient to operate.

A variety of scanning devices are known. One particularly advantageous type of reader is an optical scanner which scans a beam of light, such as a laser beam, across the symbols. Typically, a light source such as a laser generates a light beam which is optically modified to form a beam spot of a certain size at the working distance and is directed by optical components along a light path toward a bar code symbol located in the vicinity of the working distance for reflection from the symbol. The scanner includes a detector which senses the light reflected from the symbol and provides an analog scan signal representing the encoded information. A photodetector having a field of view extending across and slightly past the symbol detects light of variable intensity reflected off the symbol and generates electrical signals indicative of the detected light. A scanning component is situated in the light path. The scanning component may either sweep the beam spot across the symbol and trace a scan line across and past the symbol, or scan the field of view of the photodetector, or do both.

A digitizer, associated with or included in the scanner, processes the analog signal to produce a pulse signal where the widths and spacings between the pulses correspond to the widths of the bars and the spacings between the bars. The digitizer serves as an edge detector or wave shaper circuit, and the threshold value set by the digitizer determines what points of the analog signal represent bar edges. The pulse signal from the digitizer is applied to a decoder. The decoder first determines the pulse widths and spacings of the signal from the digitizer. The decoder then analyzes the widths and spacings to find and decode a legitimate bar code message. This includes analysis to recognize legitimate characters and sequences, as defined by the appropriate code standard. This may also include an initial recognition of the particular standard the scanned symbol conforms to. This recognition of the standard is typically referred to as autodiscrimination.

Often the particular application for the bar code reader requires that the optical scanner be constructed in the form of a hand-held unit, typically in the form of a pistol. The user points the scanner at the object and operates a trigger to activate the scanning of the bar code. In these hand-held units, a light source, such as a visible laser diode (hereinafter VLD) emits a beam of light. To scan the beam across an image, the beam is reflected from a mirror and the mirror is moved in an oscillatory fashion. The oscillation of the mirror causes the reflected beam to scan back and forth in a desired pattern. For example, U.S. Patent No. 4,251,798 discloses a rotating polygon having a planar mirror at each side, each mirror tracing a scan line across the symbol. U.S. Patent Nos. 4,387,297 and 4,409,470 both employ a planar mirror which is repetitively and reciprocally driven in alternate circumferential directions about a drive shaft on which the mirror is mounted. U.S. Patent No. 4,816,660 discloses a multi-mirror construction composed of a generally concave mirror portion and a generally planar mirror portion. The multi-mirror construction is repetitively reciprocally driven in alternate circumferential directions about a drive shaft on which the multi-mirror construction is mounted.

In optical scanners of the type discussed above, the mirror and means to oscillate the mirror add size and weight to the hand-held scanner. In applications involving protracted use, a large heavy hand-held unit can produce fatigue. Also, a user must pick up and aim the scanner at the object, and this operation may be time consuming, cumbersome and inconvenient. In particular, holding, aiming and activating the scanner ties up one of the user's hands completely so that the user cannot concurrently perform other duties. When use of the scanner produces fatigue or is in some way inconvenient, the user is reluctant to operate the scanner, which defeats the data gathering purposes for which bar code systems are intended.

In non-laser scanning systems of the type exemplified by U.S. Patent No. 4,578,571, a non-laser light emitting diode, an optical assembly, a photodetector, and electronic preamplifier/filter circuitry are all fixedly mounted on a common support that is connected to a cantilevered bimorph which is reciprocally driven to jointly move all the aforementioned components back and forth over a bar code symbol to be scanned. The large volume and heavy mass of all the commonly mounted non-laser system components require the expenditure of a great deal of power for the driver. This is not altogether practical in those cases, e.g. battery-powered operation, where power consumption is to be held to a minimum. Also, moving only one or more non-mirrored system components relative to another for conserving power was heretofore not considered desirable, because of optical alignment problems.

The components for the light scanning system, including the light source, optics, photodetector, scanning component and an electrical conductor, are mounted together in a common assembly to constitute a compact, lightweight, scan module. The scan module is mounted in an interchangeable, modular manner in housings of different configurations. For example, the housing can be hand-held and shaped as a cylinder in a so-called flashlight-type configuration, or shaped as a box, or shaped with a gun-like configuration. The housing can be mounted on the back of an operator's arm (see, for example, U.S. Patent 4,766,299) or on one or more fingers of the operator's hand, typically with the aid of a strap, a clip, or a glove. The housing can be mounted on a countertop workstation. The housing can be mounted in a mobile cart, or shopping cart, or in some cases, even in a stationary installation.

US-A-5 144 120 discloses a mirrorless optical scanner, and US-A-5 191 197 discloses incorporation of such a scanner in a modular scanner component system facilitating use of the scanner in a variety of different housing configurations.

GB-A-2 175 705 discloses a dirigible reflector made from a single crystal material such as silicon. The crystal material is selectively etched to form a central mirror surface having an extremely low mass which is freely pivoted at thin portions to a frame member. A drive element block has drives for pivoting the central mirror surface. The drives may be electrostatic or electromagnetic.

US-A-4 421 381 discloses a mechanical vibrating element made from a single insulating substrate such as silicon. The element comprises a frame and a central moving portion connected to the frame via spring portions. A coil pattern is provided on both sides of the central moving portion. When a current is passed through the coil pattern and an external magnetic field is applied, the central moving portion pivots above the spring portions.

EP-A-0 452 844 discloses a bar code scanner which uses an electromagnetic drive. A mirror is mounted on a spring member and a permanent magnet is provided for interacting with the drive coil. The spring member is not mounted across the driving coil.

### SUMMARY OF THE INVENTION

The present invention provides a compact bar code scanning element as set forth in claim 1. Preferred embodiments of the present invention may be gathered from the dependent claims.

The compact bar code scanning element is simple, capable of achieving high scanning rates, and does not utilize a relatively bulky motor-driven construction.

### BRIEF DESCRIPTION OF THE DRAWINGS

The foregoing objects and advantages of the present invention for a compact bar code scanning element may be more readily understood by one skilled in the art with reference being had to the following detailed description of a preferred embodiment thereof, taken in conjunction with the accompanying drawings wherein like elements are designated by identical reference numerals throughout the several views, and in which:

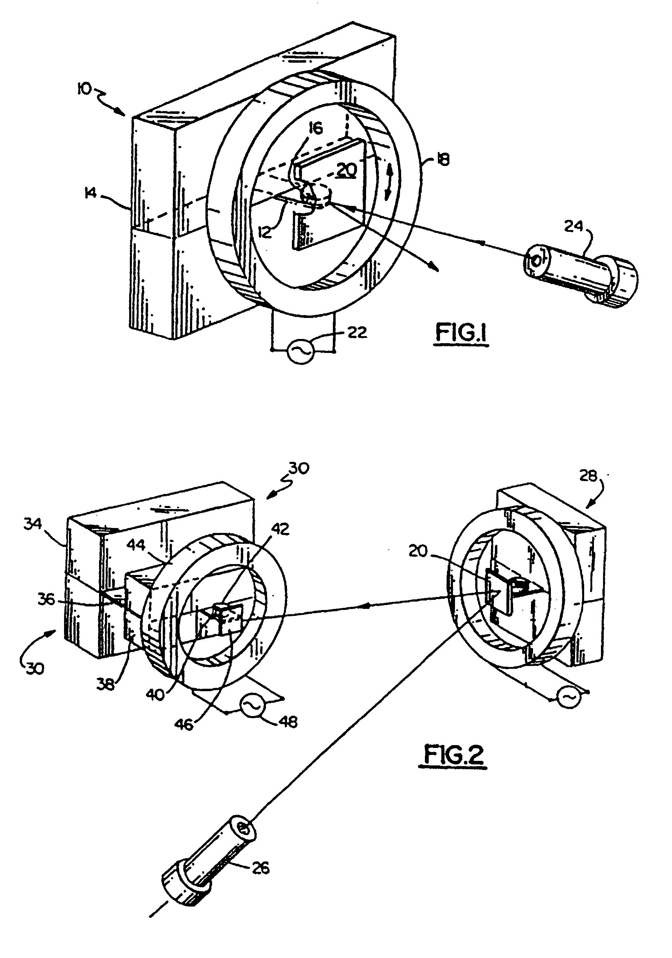

Figure 1 is a perspective view of a simple and compact linear scanning arrangement which is not in accordance with the present invention which is driven without a traditional bulky motor;
Figure 2 illustrates a universal pattern scanning arrangement which is not in accordance with the present invention and which operates partially according to the principle of operation of the scanner of Figure 1, and which is capable of scanning at a relatively high frequency in an x direction, and of either not being driven in y scanning to generate a linear x scanning pattern, or of scanning at two different frequencies in a y direction, a relatively high frequency for omnidirectional'scanning patterns, or a relatively low frequency for raster scanning patterns;

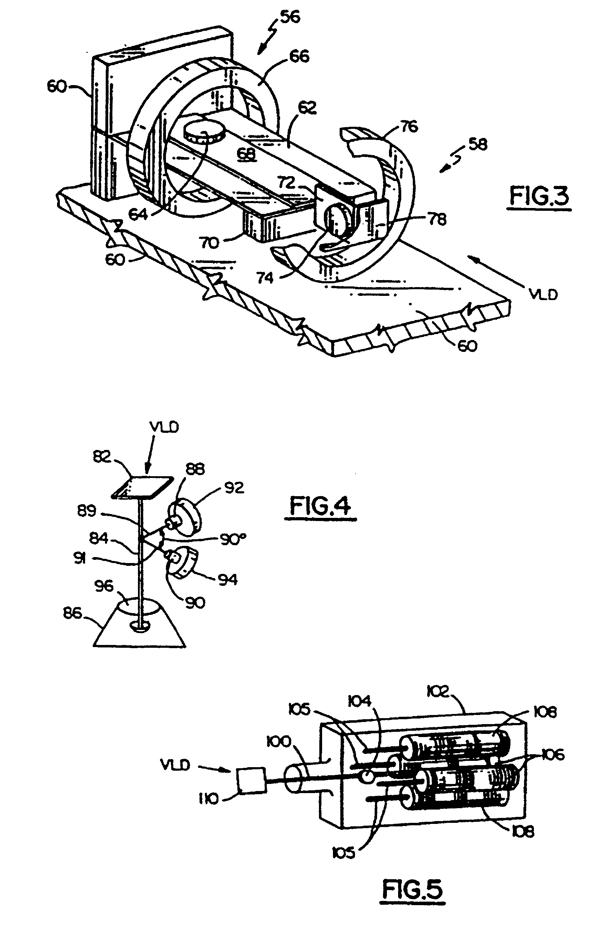

Figure 3 illustrates a third arrangement which is not in accordance with the present invention and which is somewhat similar in operation to the arrangement of Figure 2, but wherein y and x scanning mechanisms are mounted in a unitary assembly on a common base, and a single scan mirror performs both x and y scanning operations;
Figures 4, 5 and 6 illustrate three related arrangements which are not in accordance with the present invention and which are capable of producing virtually any different type of scanning pattern, including linear, omnidirectional such as Lissajous, or raster scanning patterns, and which utilize a single scanning mirror mounted at the free end of an electromagnetically driven central rod, which is capable of oscillating in two orthogonal x and y directions;

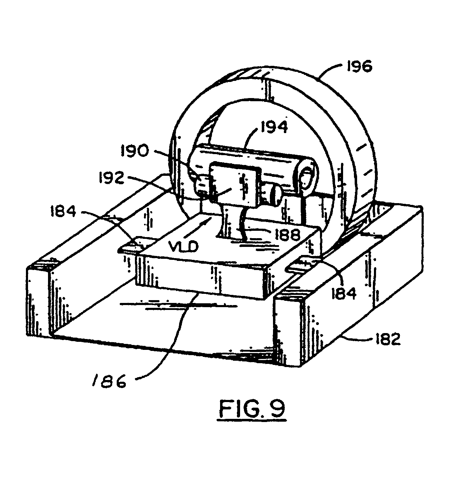

Figures 7 and 8 illustrate two related universal scanning arrangements which are not in accordance with the present invention and which include a base which mounts in cantilever fashion a low frequency y flexural member which mounts at its free end in cantilever fashion a high frequency flexural member, and wherein an x drive coil is driven with a constant high frequency drive signal to produce x scan deflections, and a second y drive coil uses a drive signal which is one of two fixed frequencies, a low frequency drive signal for raster scanning patterns, or a high frequency drive signal for omnidirectional scanning patterns;
Figure 9 illustrates a preferred arrangement of a universal compact bar code scanning arrangement (not in accordance with the present invention) in which a base includes a low frequency y flexural mounting for a mass which provides a low frequency y scanning motion, and a second flexural member is cantilever mounted on the mass and mounts at its surface a scanning mirror and a permanent magnet which interacts with an adjacent encircling x driving coil to produce high frequency x scanning movements and with an adjacent y driving coil to produce either no, or high or low frequency y scanning movements;

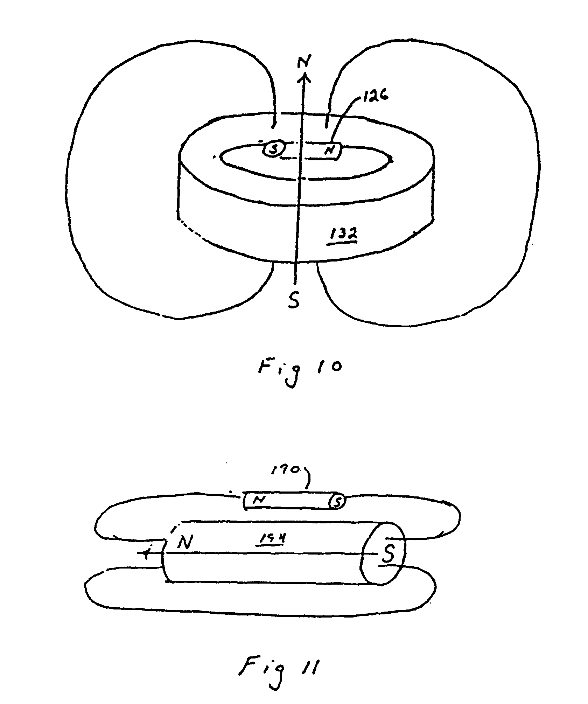

Figure 10 illustrates the mode of operation of the x driving mechanism in the arrangements of Figures 7, 8 and 9, in which a permanent magnet interacts with an adjacent x driving coil;
Figure 11 illustrates the orientation of the permanent magnet of the arrangements of Figure 9 relative to the y driving coil, and illustrates the manner in which the permanent magnet interacts with the y driving coil;
Figure 12 illustrates an arrangement wherein a miniature scanner as disclosed herein for a bar code reader is mounted within a housing supported on an index ring mounting on the index finger of an operator, and the electronics in the bar code reader communicates by a short range radio transmitter with a receiver which might typically be mounted on the belt of the operator;

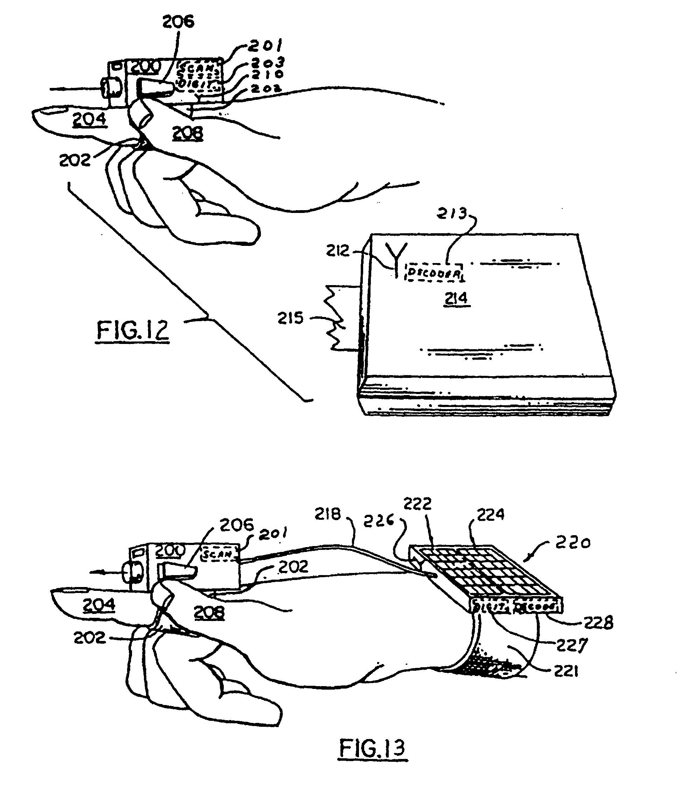

Figure 13 illustrates an arrangement similar to Figure 12 wherein a miniature scanner as disclosed herein for a bar code reader is mounted within a housing supported on an index ring mounting on the index finger of an operator, and the electronics in the bar code reader communicates by a wire with a portable terminal mounted on a wrist band on the wrist of the operator;

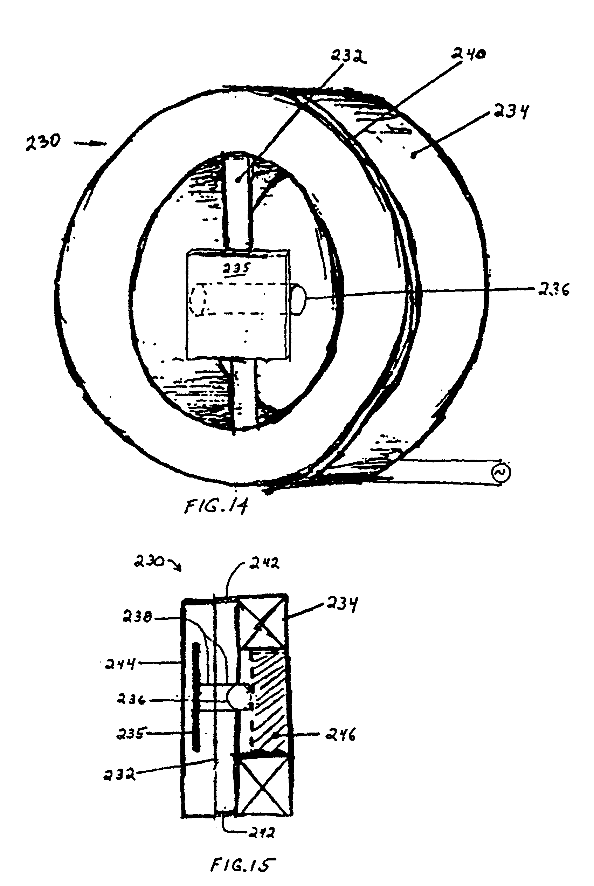

Figures 14 and 15 illustrate respectively a front perspective view and a side elevational view of an embodiment of a torsional mode, miniature scanning element pursuant to the present invention;

### DETAILED DESCRIPTION OF THE DRAWINGS

Figure 1 illustrates a simple and compact, high speed, linear bar code scanner which is driven without a traditional bulky motor. Referring to Figure 1, a linear scanning arrangement 10 is provided in which a flexural strip 12 of a suitable flexible material such as Mylar is cantilever mounted to a base 14, as by being secured between two halves of the base 14. The flexural strip 12 supports thereon a miniature permanent magnet 16 positioned inside a coil 18, with an axis passing centrally through the North and South poles of the permanent intersecting the surface of the flexural strip 12 substantially perpendicular thereto. The coil 18 is also secured to the base 14, and a scan mirror 20 is attached to the free end of the cantilever mounted flexural strip 12. By changing the dimensions (length, width and thickness) or the flexural characteristics of the cantilever mounted strip 12, or the mass of the flexural strip 12, the permanent magnet 16 and mirror 20, or the distribution of mass on the flexural strip 12, different resonant frequencies can be established for the vibrating assembly. In general, the natural resonant frequency is determined by the size (length, width and thickness) and flexural strength of the cantilever mounted member, the distribution of mass, and the total mass of the vibrating assembly. Formulas are available and are known in the art to determine the resonant frequency of the vibrating assembly, which can also be tested and developed empirically. When a periodic drive signal 22, such as a sinusoidal signal, is introduced into the coil 18, the periodically reversing magnetic field induced thereby causes the cantilever mounted assembly to oscillate up and down, as shown in Figure 1. This produces a linear scanning motion of the scan mirror 20, which causes a linear scanning of a beam directed onto the mirror by a suitable beam source such as a visible laser diode (VLD) 24. A sinusoidal periodic drive signal causes a periodically reversing magnetic field to be generated by the coil 18, thus creating moments of forces acting upon the North (N) and South (S) poles of the permanent magnet 18, to cause the magnet and the flexible strip 12 on which it is mounted, along with the scan mirror 20 (all of which comprise a cantilever mounted assembly) to vibrate up and down, perpendicular to the flat surface of the flexible strip 12, at a frequency dependent upon the frequency of the periodic drive signal.

In general, and for all of the arrangements disclosed herein, it is desirable to drive a cantilever mounted assembly or a torsional mode mounted assembly with a periodic signal at or near the resonant frequency of the assembly, and to design the assembly with a natural resonant frequency as high as possible to achieve high scan rates of up to several hundred hertz (e.g. 500 Hz). However, lower scan rates are also possible. In general, the chosen scan rate depends upon the particular application, and a 36 scans per second scan rate is typical, which is generated by a periodic signal of 18 Hz.

It is noted that in the description herein, the descriptions of further arrangements often build upon the descriptions of earlier arrangements, and accordingly the descriptions of the details, construction and mode of operation, to the extent they are identical or similar, is generally not repeated for the additional arrangements.

Figure 2 illustrates a universal pattern, compact bar code scanning arrangement which operates partially according to the principle of operation of the scanner of Figure 1, and which is capable of scanning at a relatively high frequency in an x direction, and of not scanning in a y direction for production of a linear x scan, or of scanning at two different resonant frequencies in a y direction, a relatively high frequency or a relatively low frequency. A variety of bar codes and different bar code reading conditions require different types of scan patterns, such as linear scans, raster scan patterns, or omnidirectional scan patterns such as Lissajous type scan patterns. The arrangement of Figure 2 is capable of producing all of these scan patterns with a relatively simple construction, and includes a double resonant construction for producing either a high or low frequency y vertical scan motion.

In the universal scanning arrangement of Figure 2, a light beam from a suitable source such as a Visible Laser Diode (VLD) 26 is directed initially onto a high speed horizontal x deflection arrangement 28 which produces high speed x scanning deflections of the beam. The x deflection arrangement 28 can be and preferably is the same as the linear scanning arrangement 10 in Figure 1. The resultant x scanned beam is then directed to a vertical deflection arrangement 30, which produces either no, or low or high speed vertical scanning deflections of the beam, provided respectively for raster and omnidirectional scan patterns. The y scanning arrangement 30 includes a flexible base provided with two degrees of mechanical freedom to provide two resonant conditions, a low frequency y scan for raster patterns, and a high frequency y scan for omnidirectional patterns. The y scanning arrangement is driven by the electromagnetic forces produced by a coil 44 which encircles a permanent magnet 42 mounted in the y scanning assembly 30 in a manner similar to that as explained with reference to the arrangement of Figure 1.

The y scanning assembly 30 comprises a base 34 which supports a cantilever mounted low frequency flexural strip 36 which supports at its free end a mass 38, which in turn supports a smaller cantilever mounted high frequency flexural strip 40. The flexural strip 40 mounts thereon the permanent magnet 42 positioned within the coil 44, and a scanning mirror 46 mounted at the free end of the flexural strip 40. In this arrangement, the mass 38 and all of the structure mounted thereon (40, 42, 46) can oscillate on the cantilever mounted low frequency flexible strip 36 at a low resonant frequency f_{rL}, and the magnet 42 and scan mirror 46 can oscillate on the smaller cantilever mounted high frequency flexible strip 40 at a high resonant frequency fᵣₕ. The mass 38 is selected to tune the resonant frequency of the low frequency y flexural member to be at or near the low frequency y drive signal for efficient operation. Similar to the first arrangement, for efficient operation the resonant mechanical frequency of the high frequency y flexural member with the y scanning mirror and permanent magnet mounted thereon is designed to be at or near the frequency of the periodically changing high frequency y drive signal. The resonant frequency of each vibrating assembly is determined in general by the spring constant K of the vibrating member and the mass M and distribution of mass of the vibrating assembly. In the two degree of freedom arrangement of Figure 2, each of the two vibrating assemblies has a different spring constant K (K₁ and K₂) and a different mass M (M₁ and M₂) and distribution of mass.

Selection of either the low resonant frequency f_{rL} or the high resonant frequency fᵣₕ is accomplished by changing the frequency of the y periodic drive signal 48 through the y driving coil 44. When there is no driving current through the y driving coil 44, a laser beam from the VLD 26 is incident on the mirror 20 of the scanning assembly 28 which produces a fast (about 300 Hz) x scan line, which is directed onto and reflected by the mirror 46 of the y scanning assembly 30 without any changes in the scan pattern, thereby producing a linear horizontal scan line. When a low frequency signal 48 is connected to the y driving coil 44, it produces a low frequency vertical motion about the low frequency flexible strip 36, thereby producing a raster pattern. When a high frequency signal 48 is connected to the y driving coil 40, it produces a high frequency vertical motion about the high frequency strip 40, thereby producing an omnidirectional scanning pattern. In the second arrangement, the scanning movement in the y direction can be designed to be a desired ratio to the scanning movement in the x direction in accordance with the desired omnidirectional scan pattern.

Figure 3 illustrates a third arrangement (not in accordance with the present invention) which is somewhat similar in operation to the arrangement of Figure 2, but wherein y and x scanning mechanisms 56, 58 are mounted in a unitary assembly on a common base 60, which in a compact or miniaturized scanner can comprise a PC board. For perspective, in one designed embodiment the length of the base 60 was 1.1 inches, the height was 0.45 inches, and the width was 0.45 inches. The y scanning assembly 56 includes a flexural member 62, cantilever mounted to the base 60, which mounts a permanent magnet 64 positioned inside a y driving coil 66. The flexural member 62 can be fabricated of any suitable material such as Mylar, and includes.thereon a damping flexural member 68 which can also be fabricated of any suitable material such as Mylar, which is included to damp higher frequency modes of oscillation of the y scanning assembly. A mass 70 is mounted at the free end of the cantilever flexural member 62 to tune the y scanning assembly to an appropriate low resonant frequency f_{rL}.

The x scanning assembly 58 includes a flexural member 72 cantilever mounted to the mass 70 at the free end of the y flexural member 72, and supports thereon a permanent magnet 74 positioned within an x driving coil 76. A single scan mirror 78 is mounted to the free end of the x flexural member 72, such that it is supported to be driven with high frequency x scanning movements and either no y scanning for a linear x scan or with a low frequency y scanning, to produce a raster type of scanning pattern. Each permanent magnet 64, 74 is encircled by each drive coil 66, 76, and each permanent magnet is mounted on each flexural member with an axis extending substantially centrally through its North and South poles also extending substantially perpendicular to the surface of the flexural member on which the permanent magnet is mounted. The feature of a single scan mirror is particularly advantageous as the small scan mirrors are expensive. The arrangement of Figure 3 can produce a linear scan pattern by actuation of only the x scanning assembly 58, or a raster scan pattern by actuation of both the y and x drive assemblies 56 and 58, but cannot generate an omnidirectional scanning pattern.

Figures 4, 5 and 6 illustrate three related arrangements (not in accordance with the present invention) for a compact bar code scanner which include a flexural member supported at one end in a cantilever fashion by a base, with the flexural member being able to flex in both orthogonally oriented x and y directions. A single scanning mirror is mounted on the flexural member for movement therewith, and a scanning beam is directed thereon. These arrangements are capable of producing virtually any scanning pattern, including linear, omnidirectional such as Lissajous, or raster scan patterns, and which utilize a single scanning mirror.

In the arrangement of Figure 4, a scan mirror 82 is mounted at the free end of a flexible shaft 84, the other end of which is flexibly fixed to a base 86 to provide a cantilever type mounting for the flexible shaft, which is capable of vibrating in both x and y directions. Two permanent magnets 88, 90 are mounted as by short mounting supports 89, 91 to the flexible shaft 84 and are mounted perpendicularly at 90° relative to each other. In this arrangement, axes extending centrally through both N and S poles of the permanent magnets 88 and 90 coincide respectively with the central axes of x and y driving coils 92, 94. In this arrangement, each of the coils 92, 94, when driven with a periodic drive signal, generates an alternately reversing magnetic field, as described hereinafter with reference to Figure 10, with the alternately reversing magnetic field alternately attracting and repelling the pole of the permanent magnet positioned closest to the coil. A damping material 96 such as rubber, silicon, etc. is used to mount and hold the shaft 84 in place to the base 86 to create a restoring force and to damp oscillations thereof.

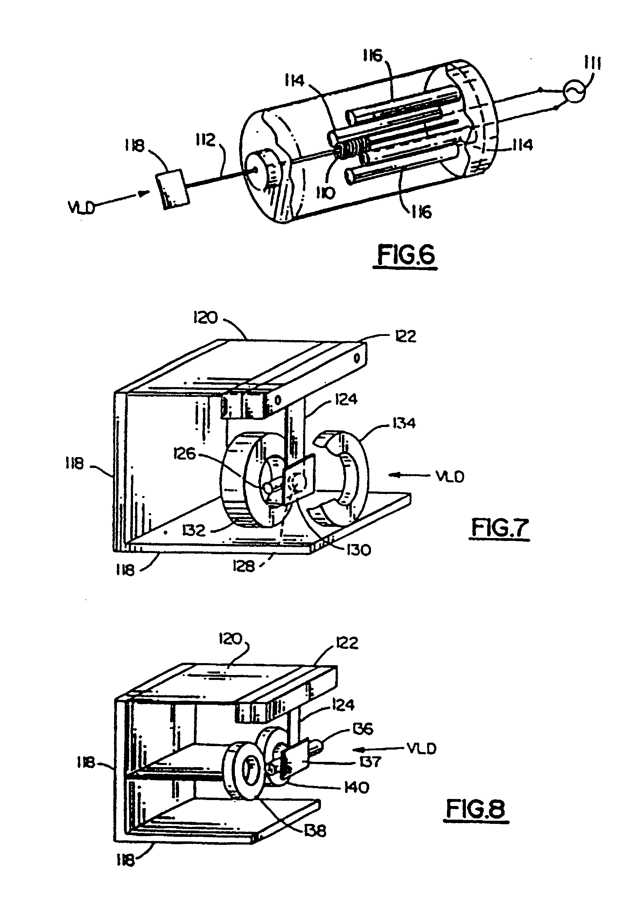

The arrangements of Figures 5 and 6 are similar, and their designs are based upon the designs of driving cartridges currently utilized to cut master records (e.g. 33 or 45 rpm recorded records). These driving cartridges are produced by manufacturers such as Shure Brothers, Inc. In the arrangement of Figure 5, a central shaft 100 is supported in a small cartridge 102, and supports a small magnet 104 which is positioned centrally between projecting magnetic cores 105 of two pairs of x and y driving coils 106, 108, with the pair of x driving coils being oriented orthogonally with respect to the pair of y driving coils. A single scan mirror 110 is supported at the free end of the shaft 100, and is driven in x and y scanning movements by periodic drive signals applied to the x and y driving coils 106, 108.

The arrangement of Figure 6 is functionally symmetrically opposite to the arrangement of Figure 5, and includes a single moving coil 110, having an input 111, which is mounted on a shaft 112 which interacts magnetically with stationary pairs of opposed x and y permanent magnets 114, 116. A single scanning mirror 118 is mounted at the free end of the shaft 112, and is driven in x and y scanning movements by a periodic drive signal applied to the coil 110.

Figures 7 and 8 illustrate two related universal scanning arrangements (not in accordance with the present invention). The arrangement of Figure 7 includes a base 118 which mounts in cantilever fashion a relatively wide, low frequency y flexural member 120 which mounts at its free end a mass 122. The mass 122 in turn mounts in cantilever fashion a relatively narrow, high frequency flexural member 124, which supports thereon two mutually perpendicular permanent magnets 126, 128 (can also be one T or cross shaped magnet) and a scan mirror 130 which is secured to the inner end (rightmost in Figure 7) of the magnet 128. The permanent magnet 126 is positioned adjacent to an x drive coil 132, and the permanent magnet 128 is positioned adjacent to a y drive coil 134, with the assembly being positioned in the air gap between the two parallel coils 132, 134, which are driven by two periodic drive signals. The x drive coil 132 is driven with a constant high frequency drive signal to produce x scan direction deflections, and the second y drive coil 134 uses a drive signal which is one of two fixed frequencies, a low frequency drive signal for a raster scan pattern, or a high frequency drive signal for Lissajous scanning patterns.

Figure 10 illustrates the mode of operation of the x driving mechanism in the arrangement of Figure 7 in which permanent magnet 126 interacts with the x driving coil 132. When the coil 132 has a periodic drive signal applied thereto, the N and S poles thereof periodically reverse themselves. When the N pole is at the top and the S pole is at the bottom of Figure 10, as illustrated in Figure 10, the permanent magnet 126 and the flexural member 124 to which it is secured are torsionally twisted such that the S end of the permanent magnet is twisted towards the N pole at top, and the N end of the permanent magnet is twisted towards the S pole at the bottom. When the poles of the driving coil are reversed and the S pole is at the top and the N pole is at the bottom of Figure 10, the permanent magnet 126 and the flexural member 124 are twisted in an opposite direction such that the N end of the permanent magnet 126 is twisted towards the S pole at the top, and the S end of the permanent magnet 126 is twisted towards the N pole at the bottom. Accordingly, the permanent magnet 126 and the flexural member 124 to which it is attached, and the scanning mirror 130, are alternately twisted and oscillated in clockwise and counterclockwise x scanning movements.

The y scanning mechanism in the arrangement of Figure 7 operates in a manner similar to the arrangement of Figure 4. The permanent magnet 128 is positioned with an axis extending centrally through the N and S ends of the permanent magnet being positioned colinear with the central axis of the y drive coil 134. One end of the permanent magnet 128 is positioned closest to the drive coil, such that as a periodic drive signal reverses the poles of the coil 134, the end of the magnet 128 closest to coil 134 is periodically attracted to and repelled by the reversing poles of the coil 134, thereby causing either the low frequency flexural strip 120 or the high frequency flexural strip 124 to bend periodically to produce either a high frequency scan with a high frequency drive signal or a low frequency scan with a low frequency drive signal.

For efficiency of operation, the torsional resonant mechanical frequency of the high frequency flexural member 124 with the scanning mirror 130 and permanent magnets 126, 128 mounted thereon is designed to be at or near the frequency of the periodically changing x drive signal. Moreover, the bending resonant mechanical frequency of the high frequency flexural member 124 with the scanning mirror 130 and permanent magnets 126, 128 mounted thereon is designed to be at or near the frequency of the periodically changing high frequency y drive signal. Also, the mass 122 is selected to tune the resonant frequency to the low frequency y drive signal.

In the seventh arrangement, the permanent magnets 126, 128 are positioned in an air gap between the x and y drive coils 132, 134, which are mounted with their central axes substantially colinear.

The arrangement of Figure 8 includes a base 118, a low frequency y drive flexural member 120, mass 122, and a high frequency x drive flexural member 124, similar to the arrangement of Figure 7. The drive arrangement includes a single horizontally positioned permanent magnet 136, with a scan mirror 137 mounted thereon, which is positioned adjacent to and is controlled and driven in scanning movements by two adjacent x and y drive coils 140, 138 which are wound on a soft metal core. The x drive coil 140 is positioned opposite the center of the permanent magnet and controls the horizontal x scanning motion, with the operation thereof being similar to the operation of the arrangement of Figure 7 (x scan). The y drive coil 138 is positioned parallel to and side by side with the first coil opposite to one poled end of the permanent magnet and controls the y vertical scanning motion. As the polarity of the y drive coil is periodically reversed, the poled end of the permanent magnet in front of coil 138 is periodically attracted to and repelled by the alternating polarity of the x drive coil 138 which produces either low frequency y scanning by low frequency flexing of the low frequency flexural member 120, or high frequency y scanning by high frequency flexing of the high frequency flexural member 124.

Figure 9 illustrates a preferred arrangement (best mode) of a compact bar code scanning arrangement (not according to the present invention) in which a mass 186 is mounted to a flexural mount 184, with each end thereof extending from an opposite side of the mass 186, which is periodically torsionally flexed back and forth to provide a slow vertical y scanning motion. In a preferred arrangement, a single flexural member 184 extends between two base mounts 182, with the mass 186 being secured to the single flexural member, as on the top thereof. Moreover, the single flexural member could be a suitable torsional rod attached directly to the base mounts 182, or attached indirectly to the base mounts 182 by suitable torsional springs. A second flexural member 188 is cantilever mounted on the mass 186, and mounts at its surface a permanent magnet 190 and a scanning mirror 192. The permanent magnet 190 interacts with an adjacent y driving coil 194 and an adjacent encircling x driving coil 196, with the magnet 190 interacting with the coils 194 and 196 in a manner as illustrated respectively in Figures 11 and 10.

Figure 11 illustrates the orientation of the permanent magnet 190 relative to the y driving coil 194, and illustrates the manner in which permanent magnet 190 interacts with the y driving coil 194. As a periodic drive signal is applied to drive coil 194, the poles of driving coil 194 periodically change. from N to S. When the y drive coil 194 has its N pole at the left end and its S pole at the right end, as illustrated in Figure 11, the magnet 190 is repelled thereby and is displaced away from the coil 194, and when the poles of the coil 194 are reversed, with the S pole at the left end and the N pole at the right end, the magnet 190 is attracted thereby and is displaced towards the coil 194, thus resulting in the magnet 190 being periodically oscillated away and towards the coil y drive 194 to produce a y scanning movement. When a low frequency y drive signal is utilized, the low frequency y drive flexural members 184 support a low frequency y drive oscillation of mirror 192, and when a high frequency y drive signal is utilized, the high frequency flexural member 188 supports a high frequency y drive oscillation.

The high frequency x drive coil 196 produces alternating reversals of the poles of the coil 196, and operates in a manner similar to the arrangement of Figure 7 (x drive). When an N pole is present at the end of coil 196 adjacent to the permanent magnet 190, the S end of the permanent magnet is attracted thereto and the N end of the permanent magnet is repelled thereby, thus producing a periodic clockwise and counterclockwise torsional flexing of the flexural member 188, to produce a high frequency x scanning of the flexural member 188 and the mirror 192 mounted thereon.

In summary, two coils 194, 196, with mutually perpendicular axes, are located adjacent the magnet/mirror assembly, with coil 194 positioned in coil 196, and provide magnetic force which causes the'entire assembly to oscillate in three modes, including a high frequency horizontal oscillation mode, either alone, or in a high frequency vertical oscillation mode or in a low frequency vertical oscillation mode.

In the ninth arrangement, the mass 186 tunes the torsional resonant frequency of the low frequency flexural member 184 which extends from opposite sides of the mass to the base, and torsionally flexes during low frequency y scanning operations.

Figure 12 illustrates an arrangement wherein a miniature scanner 201 as disclosed herein for a bar code reader is mounted within a housing 200 supported on an index ring mounting 202 on the index finger 204 of an operator. A trigger switch 206 is provided on the side of the housing 200 which is activated by the operator's thumb 208 to actuate the scanner 201. The electronics in the bar code reader communicates the data it has acquired by a short range radio transmitter 210 in the housing 200 to broadcast to an antenna 212 of a receiver in an associated control unit 214, which might typically be mounted on the belt 215 of the operator. The control unit 214 in the second housing typically would include a display, a keyboard, or a touch screen functioning as a display/keyboard, similar to that illustrated in Figure 13. In an alternative arrangement, the scanner could be voice activated with a voice recognition means installed in either the housing 200 or the control unit 214.

A typical prior art bar code reader includes a bar code scanner, a signal digitizer, and a decoder. The bar code scanner generates a light beam directed toward a symbol to be read on a target and receives reflected light from the symbol to produce an analog electrical signal corresponding to the intensity of the reflected light. The signal digitizer includes a signal processor for processing the analog electrical signal to generate therefrom a digitized signal descriptive of the bar code symbol. The decoder decodes or translates the digitized signal into data represented by the symbol.

In the arrangement of Figure 12, the finger mounted housing 200 includes therein the bar code scanner 203 for producing an analog electrical signal and a signal digitizer 203 for generating therefrom a digitized signal descriptive of the bar code symbol. The digitized signal is then transmitted by radio transmission to a decoder 213 located in the control unit 214.

Figure 13 illustrates an arrangement similar to Figure 12 wherein a miniature scanner 201 as disclosed herein for a bar code reader is mounted within a housing 200 supported on an index ring mounting 202 on the index finger 204 of an operator. A trigger switch 206 is provided on the side of the housing 200 which is activated by the operator's thumb 208, or alternatively a voice activated arrangement could be utilized therein. The electronics in the bar code reader communicates the analog signal produced by the scanner 201 by a wire 218 with a portable control terminal 220 mounted on a wrist band 221 in a wristwatch like manner on the wrist of the operator. The portable terminal 220 typically includes an LED display 222, an array 224 of entry keys, and an antenna 226 for communicating with a central computer. The analog signal on wire 218 is directed to a signal digitizer 227 located in the control terminal 220 which digitizes the analog signal, and the output digitized signal therefrom is directed to a decoder 228 also located in the control terminal 220. The output of the decoder, which is data represented by the scanned bar code symbol, is then transmitted by 226 to the central computer. Accordingly, the arrangement of Figure 13 also differs from the arrangement of Figure 12 by placing the digitizer 227 in the associated control terminal 220 rather than in the housing 200.

Figures 14 and 15 illustrate respectively a front perspective view and a side elevational view of an embodiment 230 of a torsional mode, miniature scanning element pursuant to the present invention. The embodiment of Figures 14 and 15 advantageously can be operated from a very low frequency of about 1-2 Hz to a relatively high frequency of approximately 160-180 Hz without any physical changes or mechanical adjustments or tuning. The embodiment of Figures 14 and 15 is mechanically balanced, and the vertical mounting of a torsional flexural support member 232 therein advantageously does not result in any drooping of the torsional flexural support member and the components supported thereby. In this embodiment, a vertically mounted strip 232 of flexible material is attached and mounted at the top and bottom thereof to the front of a small magnetic coil 234. A permanent magnet 236 is mounted horizontally on one side of the flexible strip and a mirror 235 is mounted to the opposite side thereof. The permanent magnet and scanning mirror can be either attached directly to the flexible strip 232 or preferably. by some type of holder 238. When an AC current is applied to the coil 234, interaction of the changing magnetic field of the coil 234 and the magnet 236 causes the flexible strip 232 to oscillate horizontally in a torsional mode.

The flexible strip 232 can be fixed to the coil by a holder 240 which might be mounted either directly to the front of the coil 234, as illustrated in Figure 14, or with an intermediate shock absorber material 242, illustrated by a spring-like member in Figure 15, in order to provide mechanical protection in the event of dropping of the scanning assembly 230. The holder 240 might have a transparent shield 244 mounted on the front thereof to provide a sandwich-type of structure for protection of the mirror. In order to enhance performance and save energy, the coil preferably has a core 246 of soft steel or similar material.

## Claims

1. A compact bar code scanning element for producing a scanning beam from a beam from a light source directed at the element, said scanning element comprising:
a. a driving coil (234);
b. a torsional flexural member (232) mounted across and supported at opposite ends by said driving coil (234) such that said member is free to torsionally flex relative to the driving coil;
c. permanent magnet means (236) mounted on said torsional flexure member for movement therewith;
d. a scanning mirror (235) in the path of the beam from the light source and mounted on said flexural member (232) for movement herewith; and
e. means for generating a periodically changing drive signal introduced into the driving coil (234) to induce a periodically changing magnet field which interacts with said permanent magnet means (236) to cause said flexural member (232) and scanning mirror (235) to torsionally flex and cause the scanning mirror to move resulting in scanning of the beam.

2. A module for use in a bar code reader comprising:
a. light source; and
b. a compact bar code scanning element as defined in claim 1.

3. A compact bar code scanner as defined in claim 1, wherein flexural member (232) is vertically mounted on the driving coil (234) to cause a horizontal scanning of the scanning beam, with the vertical mounting eliminating any drooping of the flexural member.

4. A compact bar code scanner as defined in claim 1, wherein a shock absorber material (242) mounts the flexural member on the driving coil, to absorb shocks in the event of dropping of the compact bar code scanner.

5. A compact bar code scanner as defined in claim 1, wherein said scanning mirror (235) is mounted at one side and at the middle of the flexural member (232), and the permanent magnet means (236) is mounted at an opposite side and at the middle of the flexural member.

6. A compact bar code scanner as defined in claim 4, wherein a scanning mirror and permanent magnet means holding member (238) is provided to mount the scanning mirror and permanent magnet means to the flexural member.

## Patentansprüche

1. Kompaktes Strichcode-Scan-Element zum Erzeugen eines scannenden bzw. hin- und herstreichenden Strahls aus einem Strahl von einer Lichtquelle, welcher auf das Element gerichtet ist, wobei das Scan-Element folgendes aufweist:
a. eine Antriebsspule (234);
b. ein Torsionsbiegungsglied (232), das über die Antriebsspule (234) hinweg angebracht ist und an entgegengesetzten Enden durch die Antriebsspule (234) getragen ist, so daß das Glied frei ist zum torsionsmäßigen Biegen relativ zu der Antriebsspule;
c. Permanentmagnetmittel (236), die an dem Torsionsbiegungsglied angebracht sind zur Bewegung damit;
d. einen Scan-Spiegel (235) im Pfad des Strahls von der Lichtquelle und angebracht auf dem Biegungsglied (232) zur Bewegung damit; und
e. Mittel zum Erzeugen eines sich periodisch ändernden Antriebssignals, das in die Antriebsspule (234) eingeführt wird, um ein sich periodisch änderndes Magnetfeld zu induzieren, das mit den Permanentmagnetmitteln (236) in Wechselwirkung tritt, um zu bewirken, dass sich das Biegungsglied (232) torsionsmäßig verbiegt und der Scan-Spiegel (235) bewegt, was ein Scannen bzw. Hin- und Herstreichen des Strahls ergibt.

2. Modul zur Verwendung in einem Strichcode-Leser, wobei das Modul folgendes aufweist:
a. eine Lichtquelle; und
b. ein kompaktes Strichcode-Scan-Element gemäß Anspruch 1.

3. Kompakter Strichcode-Scanner gemäß Anspruch 1, wobei das Biegungsglied (232) auf der Antriebsspule (234) vertikal angebracht ist, um ein horizontales Scannen des scannenden Strahls zu bewirken, wobei die vertikale Anbringung jegliches Absenken bzw. jegliche Abwärtsneigung des Biegungsglieds beseitigt.

4. Kompakter Strichcode-Scanner gemäß Anspruch 1, wobei ein Stoßdämpfermaterial (242) das Biegungsglied an der Antriebsspule befestigt, um Stöße zu absorbieren im Fall des Fallenlassens des kompakten Strichcode-Scanners.

5. Kompakter Strichcode-Scanner gemäß Anspruch 1, wobei der Scan-Spiegel (235) auf einer Seite und an der Mitte des Biegungsglieds (232) angebracht ist, und wobei die Permanentmagnetmittel (236) auf einer entgegengesetzten Seite und an der Mitte des Biegungsglieds angebracht sind.

6. Kompakter Strichcode-Scanner gemäß Anspruch 4, wobei ein Halteglied (238) für Scan-Spiegel und Permanentmagnetmittel vorgesehen ist zum Anbringen des Scan-Spiegels und der Permanentmagnetmittel an dem Biegungsglied.

## Revendications

1. Élément compact de balayage de code barre pour produire un faisceau de balayage à partir d'un faisceau provenant d'une source lumineuse dirigée au niveau de l'élément, l'élément de balayage comprenant :
a) une bobine d'entraînement (234) ;
b) un élément de flexion à torsion (232) monté en travers, et supporté aux extrémités opposées par la bobine d'entraînement (234) de sorte que l'élément est libre de fléchir en torsion par rapport à la bobine d'entraînement ;
c) un moyen d'aimant permanent (236) monté sur l'élément de flexion à torsion pour se déplacer avec lui ;
d) un miroir de balayage (235) dans le trajet du faisceau lumineux et monté sur l'élément de flexion (232) pour se déplacer avec lui ; et
e) un moyen pour produire un signal d'entraînement variant périodiquement introduit dans la bobine d'entraînement (234) pour induire un champ magnétique variant périodiquement qui interagit avec le moyen d'aimant permanent (236) pour amener l'élément de flexion (232) et le miroir de balayage (235) à fléchir en torsion et amener le miroir de balayage à se déplacer, d'où il résulte un balayage du faisceau.

2. Module destiné à être utilisé dans un lecteur de code barre, comprenant :
a) une source lumineuse ; et
b) un élément compact de balayage de code barre selon la revendication 1.

3. Lecteur compact de code barre selon la revendication 1, dans lequel l'élément de flexion (232) est monté verticalement sur la bobine d'entraînement (234) pour provoquer un balayage horizontal du faisceau de balayage, le montage vertical éliminant tout affaissement de l'élément de flexion.

4. Lecteur compact de code barre selon la revendication 1, dans lequel un matériau absorbeur de choc (242) assure le montage de l'élément de flexion sur la bobine d'entraînement pour absorber les chocs dans le cas d'une chute du lecteur compact de code barre.

5. Lecteur compact de code barre selon la revendication 1, dans lequel le miroir d'un balayage (235) est monté sur un côté et au milieu de l'élément de flexion (232), et le moyen d'aimant permanent (236) est monté sur un côté opposé et le milieu de l'élément de flexion.

6. Lecteur compact de code barre selon la revendication 4, dans lequel un élément de montage de miroir de balayage et de moyen d'aimant permanent (238) est prévu pour monter le miroir de balayage et le moyen d'aimant permanent sur l'élément de flexion.
